# EUROPEAN PATENT APPLICATION

(11) **EP 1 626 397 A2**
(43) Date of publication of application: **15.02.2006**
(21) Application number: 05077103.9
(22) Date of filing: 01.12.2000
(51) Int. Cl.: G11B 7/085, G11B 19/12

(54) **Apparatus for generating a track cross signal**

(30) Priority: 02.12.1999 KR 9954475
(62) Divisional of application: 00310677.0
(71) Applicant: Samsung Electronics Co., Ltd., Suwon-si, Gyeonggi-Do (KR)
(72) Inventor: Choi, Byoung-ho, Paldal-gu Suwon-city Kyungki-do (KR); Ma, Byung-in, Changan-gu Suwon-city Kyungki-do (KR)
(74) Representative: Robinson, Ian Michael

(57) **Abstract**

An apparatus for generating a track cross signal in an optical disc recording/reproducing device comprises a first track cross signal generator (502) for generating a track cross signal from an envelope of an RF SUM signal, a second track cross signal generator (504) for generating a track cross signal from an envelope of a radial push-pull signal, a disc determiner (508) for distinguishing a low density disc from a high density disc and a switch (506) for selectively outputting the output of the first track cross signal generator (502) or the output of the second track cross signal generator (504) according to the determination result of the disc determiner.

## Description

The present invention relates to an optical recording/reproducing device, and more particularly, to an apparatus for generating a track cross signal.

It is an aim of the present invention to provide an apparatus for generating a track cross signal.

It is desired to generate a track cross signal in an optical recording/reproducing device that can be applied to a high density optical disc and a low density optical disc.

It is desired to generate a track cross signal in an optical recording/reproducing device that can be applied to a high-definition digital versatile disc (HD-DVD) from a digital versatile disc (DVD).

According to the present invention there is provided an apparatus and method as set forth in the appended claims. Preferred features of the invention will be apparent from the dependent claims, and the description which follows.

In a first aspect of the invention, there is provided an apparatus for generating a track cross signal in an optical disc recording/reproducing device, which can be applied to high and low density discs, comprising a first track cross signal generator for generating a track cross signal from the envelope of the RF SUM signal obtained by adding to each other the light receiving signals generated by light receiving sections of a photodetector divided into at least two sections in a radial direction, a second track cross signal generator for generating a track cross signal from the envelope of the radial push-pull signal obtained by subtracting the light receiving signal generated by one light receiving section in the radial direction from the light receiving signal generated by the other light receiving section in the radial direction, in the photodetector divided into at least two sections in the radial direction, a type of disc determiner for distinguishing a low density disc from a high density disc, and a switch for selectively outputting the output of the first track cross signal or the output of the second track cross signal according to the determination result of the type of disc determiner.

In a second aspect of the invention, there is provided a method for determining the type of a disc in an optical disc recording/reproducing device that can be applied to both high and low density discs, comprising the steps of obtaining a radial push-pull signal by subtracting the light receiving signal generated by one light receiving section in a radial direction from the light receiving signal generated by the other light receiving section in the radial direction, in a photodetector divided into at least two sections in the radial direction, detecting the upper and lower envelope signals of the radial push-pull signal, and detecting the phase difference between the upper envelope signal and the lower envelope signal and distinguishing a low density disc from a high density disc according to the magnitude of the phase difference.

In a third aspect of the invention, there is provided an apparatus for determining the type of a disc in an optical disc recording/reproducing device that can be applied to both high and low density discs, the apparatus comprising a radial subtracter for obtaining an RF signal by subtracting the light receiving signal generated by one light receiving section in a radial direction from the light receiving signal generated by the other light receiving section in the radial direction, in a photodetector divided into at least two sections in the radial direction, an upper envelope detector for detecting the upper envelope of an RF signal output from the radial subtracter, a lower envelope detector for detecting the lower envelope of the RF signal output from the radial subtracter, a phase comparator for detecting the phase difference between the upper envelope signal detected by the upper envelope detector and the lower envelope signal detected by the lower envelope detector, and a disc determiner for distinguishing a low density disc from a high density disc according to the magnitude of the phase signal detected by the phase comparator.

For a better understanding of the invention, and to show how embodiments of the same may be carried into effect, reference will now be made, by way of example, to the accompanying diagrammatic drawings in which:
Figures 1A through 1E show waveforms for schematically illustrating a method for determining the type of a high-definition digital versatile disc (HD-DVD);
Figures 2A through 2E show waveforms for schematically illustrating a method for determining the type of a digital versatile disc (DVD);
Figure 3 is a block diagram showing the structure of an apparatus for determining the type of a disc;
Figure 4 is a flowchart showing the operation of the microprocessor 320 shown in Figure 3; and
Figure 5 is a block diagram showing the structure of an apparatus for selecting a track cross signal.

Hereinafter, the structure and operation of the present invention will be described in detail with reference to the attached drawings.

In order to realize a high-definition digital versatile disc (HD-DVD), it is known to use the methods of reducing the wavelength of a light source, increasing the NA of an object lens, narrowing the track pitch of an optical disc, and reducing the length of a recording pit. In particular, in the case of an optical disc of 12cm, there are limitations on narrowing the track pitch of the optical disc and reducing the length of the recording pit due to limitations on manufacturing the light source and the object lens. Unlike in a conventional CD or DVD, in the HD-DVD, since the size of an optical spot is larger than the track pitch due to such limitations, a crosstalk phenomenon occurs, in which the information recorded on an adjacent track is mixed with the information of a currently read track.

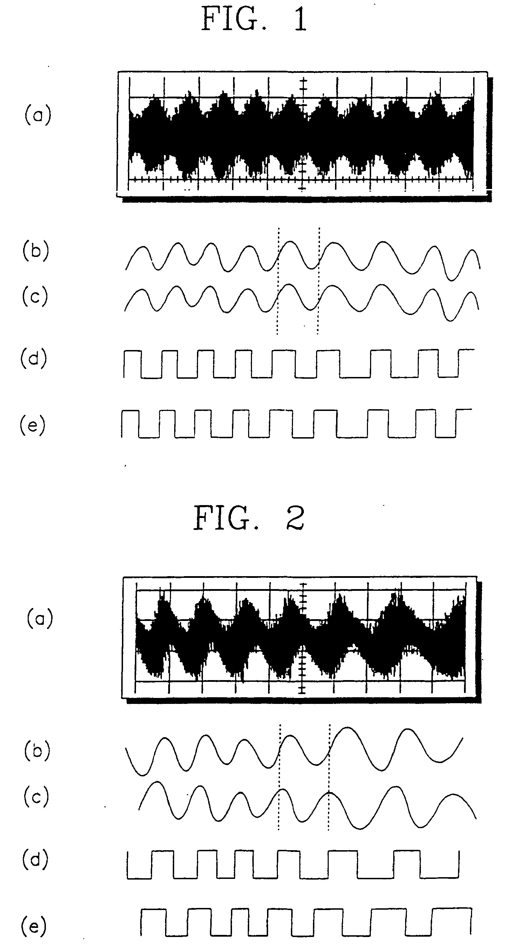

Figures 1A through 1E show waveforms for schematically illustrating a method for determining the type of a high-definition digital versatile disc (HD-DVD) according to a preferred embodiment of the present invention.

Figure 1A shows the waveform of a radial push-pull signal. Figure 1B shows the waveform of the upper envelope signal of the radial push-pull signal shown in Figure 1A. Figure 1C shows the waveform of the lower envelope signal of the radial push-pull signal shown in Figure 1A. Figures 1D and 1E show the waveforms obtained by shaping the waveforms of the signals shown in Figures 1B and 1C.

As shown in Figures 1D and IE, in the HD-DVD, the phase of the upper envelope signal of the radial push-pull signal is almost identical to the phase of the lower envelope signal of the radial push-pull signal.

Figures 2A through 2E show waveforms for schematically illustrating a method for determining the type of a DVD according to a preferred embodiment of the present invention. Figure 2A shows the waveform of a radial push-pull signal. Figure 2B shows the waveform of the upper envelope signal of the radial push-pull signal shown in Figure 2A. Figure 2C shows the waveform of the lower envelope signal of the radial push-pull signal shown in Figure 2A. Figures 2D and 2E show the waveforms obtained by shaping the waveforms of the signals shown in Figures 2B and 2C.

As shown in Figures 2D and 2E, in the DVD, the phase of the upper envelope signal of the radial push-pull signal is different from the phase of the lower envelope signal of the radial push-pull signal by almost 90°.

The reason why the difference in phase between the upper envelope signal of the radial push-pull signal and the lower envelope signal of the radial push-pull signal in the DVD is that crosstalk between adjacent tracks is larger in the HD-DVD than in the DVD.

Namely, it is possible to distinguish the DVD from the HD-DVD by comparing the phase of the upper envelope signal of the radial push-pull signal with the phase of the lower envelope signal of the radial push-pull signal.

The method for determining the type of a disc is performed as follows.
(a) A radial push-pull signal, which is the difference signal between the light receiving signals generated by light receiving devices arranged in a radial direction in a photodetector, is generated.
(b) The upper envelope signal of the radial push-pull signal is detected.
(c) The lower envelope signal of the radial push-pull signal is detected.
(d) The phase difference between the upper envelope signal of the radial push-pull signal and the lower envelope signal of the radial push-pull signal is detected.
(e) A high density disc is distinguished from a low density disc according to the magnitude of the detected phase difference.

For example, it is determined that the low density disc is loaded when the detected phase difference is larger than a reference value and that the high density disc is loaded when the detected phase difference is smaller than the reference value.

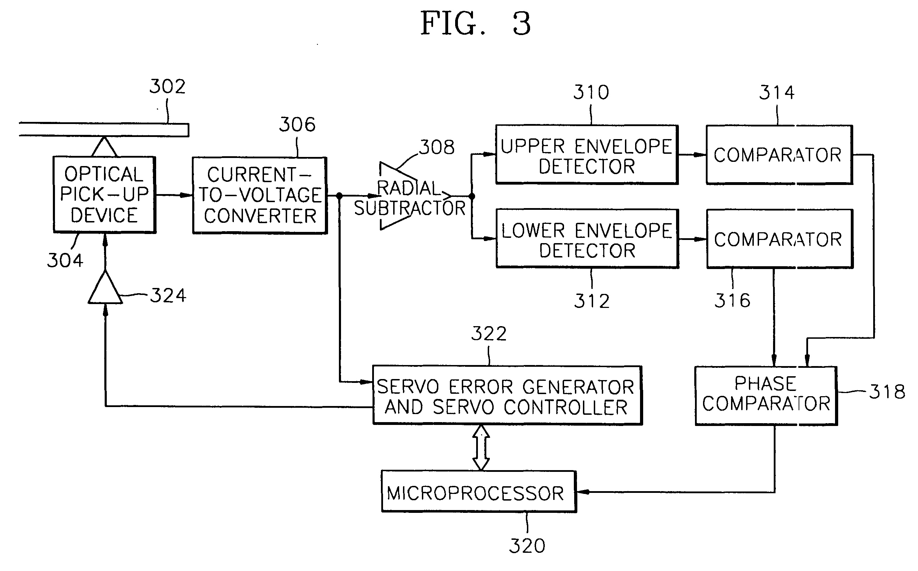

Figure 3 is a block diagram showing the structure of a preferred apparatus for determining the type of a disc. In Figure 3, reference numerals 302, 304, 306, 308, 310, 312, 314 and 316, 318, 320, 322, and 324 denote a HD-DVD or DVD disc, an optical pick-up device, a current-to-voltage converter, a radial subtracter, an upper envelope detector, a lower envelope detector, comparators for shaping waveforms, a phase comparator, a microprocessor for determining the type of a disc, i.e. a disc determiner, a servo error signal generator and servo controller, and a servo driver, respectively.

The radial subtracter 308 generates the difference signal between the light receiving signals generated by light receiving devices arranged in a radial direction in a photodetector (not shown) and provides the difference signal as the radial push-pull signal. Here, the radial direction refers to a direction that is perpendicular to the direction in which a pit stream is recorded on a track. The photodetector is typically divided into four sections or eight sections. However, it is sufficient to divide the photodetector into two sections in the radial direction. The photodetector is generally located inside the optical pick-up 304 and generates a light receiving signal corresponding to the light intensity of the optical spot reflected from a disc.

The photodetector (not shown) inside the optical pick-up 304 generates an optical signal corresponding to the intensity of the optical signal reflected from the disc. The optical signal is current-to-voltage converted through the current-to-voltage converter 306. The radial subtracter 308 subtracts one light receiving signal generated by the current-to-voltage converter 306 from the other light receiving signal generated by the current-to-voltage converter 306 in the radial direction and generates the radial push-pull signal RF0 shown in Figure 1A or 2A.

The upper envelope detector 310 detects the upper envelope of the signal RF0 generated by the radial subtracter 308 and outputs the upper envelope signal shown in Figure 1B or 2B. The upper envelope detector 310 can be realized by a peak detector.

The lower envelope detector 312 detects the lower envelope of the signal RF0 generated by the radial subtracter 308 and outputs the lower envelope signal shown in Figure 1C or 2C. The lower envelope detector 312 can be realized by a bottom detector.

The comparators 314 and 316 compare the upper envelope signal provided by the upper envelope detector 310 with a predetermined threshold value and the lower envelope signal provided by the lower envelope detector 312 with the predetermined threshold value, respectively, and binarize the upper envelope signal and the lower envelope signal.

The phase comparator 318 compares the phase of the binarized upper envelope signal provided by the comparator 314 with the phase of the binarized lower envelope signal provided by the comparator 316 and generates an electrical signal corresponding to the phase difference. The microprocessor 320 determines the type of a disc according to the magnitude of the signal provided by the phase comparator 318. For example, when it is determined by the phase comparator 318 that there is little phase difference, the microprocessor determines that the HD-DVD is loaded. When it is determined by the phase comparator 318 that there is a phase difference of about 90°, the microprocessor determines that the DVD is loaded.

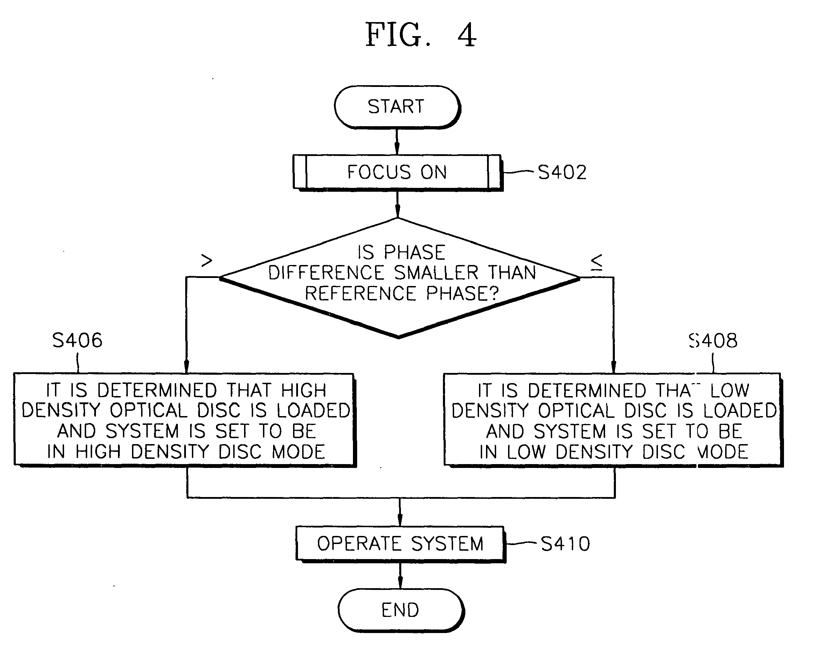

Figure 4 is a flowchart showing the operation of the microprocessor 320 shown in Figure 3. The flowchart shown in Figure 4 includes a focusing-on step (S402), a phase difference determining step (S404), a high density disc setting step (S406), a low density disc setting step (S408), and a system operating step (S410).

In the phase difference determining step S404, the microprocessor 320 determines whether the phase difference is smaller than a reference phase difference with reference to the signal provided by the phase comparator 318 of Figure 3. When it is determined that the phase difference is smaller than the reference phase difference, it is determined that the high density disc is loaded and the process proceeds to the high density disc setting step S406, in which a system is set to be in a high density disc mode. When it is determined that the phase difference is equal to or larger than the reference phase difference, it is determined that the low density disc is loaded and the process proceeds to the low density disc setting step S408, in which the system is set to be in a low density disc mode.

The apparatus for determining the disc, which is shown in Figure 3, can be used together with the servo error generator since the high density disc is distinguished from the low density disc using the light receiving signal generated by the photodetector.

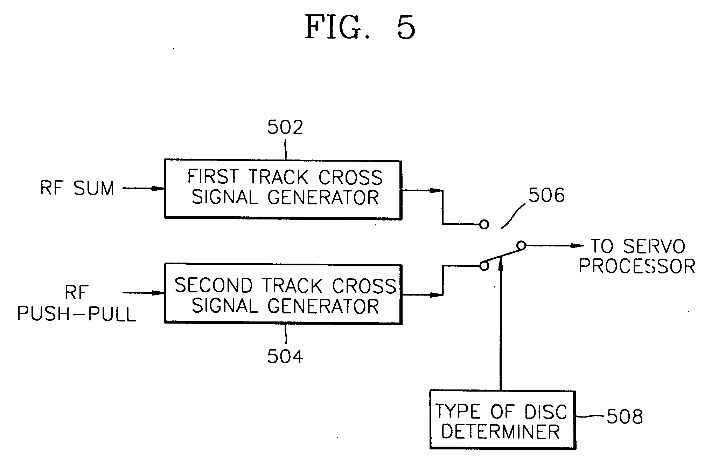

Figure 5 is a block diagram showing the structure of an apparatus for generating a track cross signal. The apparatus shown in Figure 5 includes a first track cross signal generator 502, which is suitable for the low density disc, a second track cross signal generator 504, which is suitable for the high density disc, and a type of disc determiner 508.

The first track cross signal generator 502 generates the track cross signal from the RF SUM signal generated by the photodetector by binarizing the envelope of the RF SUM signal. The second track cross signal generator 504 generates the track cross signal from the radial push-pull signal of the photodetector by binarizing the envelope of the radial push-pull signal.

In the low density disc, it is easy to obtain the envelope of the RF SUM signal. However, in the high density disc, it is easy to obtain the envelope of the radial push-pull signal. Therefore, it is necessary to generate the track cross signal by different methods depending on whether the disc is a low density disc or a high density disc. The first track cross signal generator 502 and the second track cross signal generator 504 of Figure 5 may take any suitable form. A preferred track cross signal generator is disclosed in detail in the Patent Application No. 99-39832, which is entitled "Method for Detecting a Track Cross Signal of an Optical Disc Recording/reproducing Device and Apparatus therefor" and was filed by the applicant of the present invention.

The type of disc determiner 508 distinguishes the low density disc from the high density disc by the phase difference between the upper envelope signal of the radial push-pull signal and the lower envelope signal of the radial push-pull signal, according to the preferred method for determining the type of a disc.

The switch 506 selects the output of the first track cross signal generator 502 or the output of the second track cross signal generator 504 depending on the determination result of the type of disc determiner 508 and outputs the selected output. Namely, when it is determined by the type of disc determiner 508 that the disc is the low density disc, the output of the first track cross signal generator 502 is selected and output. When it is determined by the type of disc determiner 508 that the disc is the high density disc, the output of the second track cross signal generator 504 is selected and output.

As mentioned above, the apparatus for determining the type of a disc can be used together with the servo error generator since the high density disc is distinguished from the low density disc using the light receiving signal generated by the photodetector.

Although a few preferred embodiments have been shown and described, it will be appreciated by those skilled in the art that various changes and modifications might be made without departing from the scope of the invention, as defined in the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. An apparatus for generating a track cross signal in an optical disc recording/reproducing device, which can be applied to high and low density discs, comprising:
a first track cross signal generator (502) for generating a track cross signal from the envelope of the RF SUM signal obtained by adding to each other the light receiving signals generated by light receiving sections of a photodetector divided into at least two sections in a radial direction;
a second track cross signal generator (504) for generating a track cross signal from the envelope of the radial push-pull signal obtained by subtracting the light receiving signal generated by a first light receiving section in the radial direction from the light receiving signal generated by a second light receiving section in the radial direction, in the photodetector divided into at least two sections in the radial direction;
a disc determiner (508) for distinguishing a low density disc from a high density disc; and
a switch (506) for selectively outputting the output of the first track cross signal generator (502) or the output of the second track cross signal generator (504) according to the determination result of the disc determiner (508).

2. The apparatus of claim 1, wherein the disc determiner (508) distinguishes a low density disc from a high density disc according to the phase difference between the upper envelope signal of the radial push-pull signal and the lower envelope signal of the radial push-pull signal.

3. The apparatus of claim 1 or 2, wherein the disc determiner (508) comprises:
an upper envelope detector (310) for detecting the upper envelope of the radial push-pull signal;
a lower envelope detector (312) for detecting the lower envelope of the radial push-pull signal;
a phase comparator (318) for detecting the phase difference between the upper envelope signal detected by the upper envelope detector and the lower envelope signal detected by the lower envelope detector; and
a disc determiner (320) for distinguishing a low density disc from a high density disc according to the magnitude of the phase difference signal detected by the phase comparator.
